# EUROPEAN PATENT APPLICATION

(11) **EP 4 271 000 A1**
(43) Date of publication of application: **01.11.2023**
(21) Application number: 20966425.9
(22) Date of filing: 24.12.2020
(51) Int. Cl.: H04W 4/12, H04W 68/00, H04W 76/10

(54) **PAGING METHOD AND APPARATUS, AND STORAGE MEDIUM**

(71) Applicant: Beijing Xiaomi Mobile Software Co., Ltd., Beijing 100085 (CN)
(72) Inventor: HONG, Wei, Beijing 100085 (CN)
(74) Representative: Kudlek, Franz Thomas
(86) International application number: PCT/CN2020/138828
(87) International publication number: WO 2022/133852

(57) **Abstract**

Provided in the present disclosure are a paging method and apparatus, and a storage medium. The paging method comprises: in response to the determination that a terminal has downlink data arriving, determining whether a paging reason needs to be carried in a target notification message; and in response to the determination that the paging reason needs to be carried in the target notification message, transmitting the target notification message carrying the paging reason to a second network-side device. The present disclosure allows the dynamic determination of whether to inform the terminal of the paging reason, prevents the waste of air interface paging resources, and provides high availability.

## Description

### TECHNICAL FIELD

The present disclosure relates to a field of communications, and particularly to a paging method and apparatus, and a storage medium.

### BACKGROUND

With a development of wireless communication technology, there are multi-card terminals in growing numbers. At present, a processing manner for the multi-card terminal is mainly based on an implementation of each terminal manufacturer, which results in many different terminal behaviors and processing manners, such as dual-card single-standby, dual-card dual-standby single-pass, dual-card dual-standby dual-pass, and the like. In practice, different problems may be encountered, for example, a paging collision, one card performing business and paging failure occurring to another card, the business performed by one card being interrupted to respond to paging of another card, and the like, which brings a poor experience to a user.

One of problems mainly solved by the Rel-17 (Release 17) MUSIM (mutil-universal subscriber identity module) of 3GPP (3rd generation partnership project) is that for the multi-card terminal, when one card is performing the business and another card receives a paging message, the business performed by the current card is suspended to respond to the paging message. If there is some unimportant data, such as a short message, update data of an application program, and the like, the current business is interrupted.

At present, when a multi-card terminal receives the paging message, a network side device may tell an upcoming business type, such as voice business, data business, and the like, through a paging cause. In this way, the UE may determine whether to interrupt the current business based on a value of the paging cause, and make a paging response. However, in a process of using the mobile phone supporting multiple cards in life, there may be a case where only one card works in many times, or a case where only one card is mounted for a period of time and multiple cards are mounted for another period of time. In this case, an existing mechanism of the paging cause cannot be flexibly applicable.

### SUMMARY

A paging method and apparatus, and a storage medium are provided in embodiments of the present disclosure to overcome the problems existing in the related art.

According to a first aspect of the embodiments of the present disclosure, a paging method is provided, and the method is applied to a first network side device. The method includes:
determining whether a paging cause needs to be carried in a target notification message, in response to determining that a terminal has downlink data arrived; and
sending the target notification message carrying the paging cause to a second network side device, in response to determining that the paging cause needs to be carried in the target notification message.

Optionally, before sending the target notification message carrying the paging cause to the second network side device, the method further includes:
determining a bit value corresponding to the paging cause carried in the target notification message.

Optionally, determining the bit value corresponding to the paging cause carried in the target notification message includes:
determining the bit value corresponding to the paging cause carried in the target notification message based on differentiated services code point (DSCP) information of a downlink data packet.

Optionally, determining whether the paging cause needs to be carried in the target notification message includes:
determining whether the paging cause needs to be carried in the target notification message at least based on state indication information corresponding to the terminal, in which the state indication information is configured to indicate a number of universal subscriber identity module (USIM) cards in a registration state on the terminal.

Optionally, before determining that the terminal has the downlink data arrived, the method further includes:
obtaining the state indication information corresponding to the terminal from a third network side device.

Optionally, the third network side device is a unified data management (UDM) device.

Optionally, determining whether the paging cause needs to be carried in the target notification message at least based on the state indication information corresponding to the terminal includes at least one of:
determining that the paging cause needs not to be carried in the target notification message, in response to determining that the state indication information includes first state information, in which the first state information is configured to indicate that the number of USIM cards in the registration state on the terminal is zero or one; or
determining that the paging cause needs to be carried in the target notification message, in response to determining that the state indication information includes second state information, in which the second state information is configured to indicate that the number of USIM cards in the registration state on the terminal is greater than or equal to two.

According to a second aspect of the embodiments of the present disclosure, a paging method is provided, and the method is applied to a second network side device. The method includes:
sending a paging message carrying a paging cause to a terminal, in response to receiving a target notification message carrying the paging cause sent by a first network side device.

According to a third aspect of the embodiments of the present disclosure, a paging method is provided, and the method is applied to a second network side device. The method includes:
determining whether a paging cause needs to be carried in a paging message, in response to receiving a target notification message sent by a first network side device; and
sending the paging message carrying the paging cause to a terminal, in response to determining that the paging cause needs to be carried in the paging message.

Optionally, determining whether the paging cause needs to be carried in the paging message includes:
determining whether the paging cause needs to be carried in the paging message at least based on state indication information corresponding to the terminal.

Optionally, the method further includes:
obtaining the state indication information corresponding to the terminal from the terminal or a third network side device in advance.

Optionally, the third network side device is a unified data management (UDM) device.

Optionally, determining whether the paging cause needs to be carried in the paging message at least based on the state indication information corresponding to the terminal includes at least one of:
determining that the paging cause needs not to be carried in the paging message, in response to determining that the state indication information includes first state information, in which the first state information is configured to indicate that a number of USIM cards in a registration state on the terminal is zero or one; or
determining that the paging cause needs not to be carried in the paging message, in response to determining that the state indication information includes second state information and the terminal being in a connected state, in which the second state information is configured to indicate that a number of USIM cards in a registration state on the terminal is greater than or equal to two; or
determining that the paging cause needs to be carried in the paging message, in response to determining that the state indication information includes second state information and the terminal being in an idle state; or
determining that the paging cause needs to be carried in the paging message, in response to determining that the state indication information includes second state information, a 3GPP connection corresponding to the terminal being in a connected state, a non-3GPP connection being in an idle state, and existence of downlink data corresponding to non-3GPP connection business that needs to be sent to the terminal.

Optionally, the target notification message carries the paging cause or does not carry the paging cause.

According to a forth aspect of the embodiments of the present disclosure, a paging apparatus is provided, and the apparatus is applied to a first network side device. The apparatus includes:
a first determining module, configured to determine whether a paging cause needs to be carried in a target notification message, in response to determining that a terminal has downlink data arrived;
a first sending module, configured to send the target notification message carrying the paging cause to a second network side device, in response to determining that the paging cause needs to be carried in the target notification message.

Optionally, the apparatus further includes:
a second determining module, configured to determine a bit value corresponding to the paging cause carried in the target notification message.

Optionally, the second determining module includes:
a first determining submodule, configured to determine the bit value corresponding to the paging cause carried in the target notification message based on differentiated services code point (DSCP) information of a downlink data packet.

Optionally, the first determining module includes:
a second determining submodule, configured to determine whether the paging cause needs to be carried in the target notification message at least based on state indication information corresponding to the terminal, in which the state indication information is configured to indicate a number of universal subscriber identity module (USIM) cards in a registration state on the terminal.

Optionally, the apparatus further includes:
a first obtaining module, configured to obtain the state indication information corresponding to the terminal from a third network side device.

Optionally, the third network side device is a unified data management (UDM) device.

Optionally, the second determining submodule includes at least one of:
a first determining unit, configured to determine that the paging cause needs not to be carried in the target notification message, in response to determining that the state indication information includes first state information, in which the first state information is configured to indicate that the number of USIM cards in the registration state on the terminal is zero or one; or
a second determining unit, configured to determine that the paging cause needs to be carried in the target notification message, in response to determining that the state indication information includes second state information, in which the second state information is configured to indicate that the number of USIM cards in the registration state on the terminal is greater than or equal to two.

According to a fifth aspect of the embodiments of the present disclosure, a paging apparatus is provided, and the apparatus is applied to a second network side device. The apparatus includes:
a second sending module, configured to send a paging message carrying a paging cause to a terminal, in response to receiving a target notification message carrying the paging cause sent by a first network side device.

According to a sixth aspect of the embodiments of the present disclosure, a paging apparatus is provided, and the apparatus is applied to a second network side device. The apparatus includes:
a third determining module, configured to determine whether a paging cause needs to be carried in a paging message, in response to receiving a target notification message sent by a first network side device;
a third sending module, configured to send the paging message carrying the paging cause to a terminal, in response to determining that the paging cause needs to be carried in the paging message.

Optionally, the third determining module includes:
a third determining submodule, configured to determine whether the paging cause needs to be carried in the paging message at least based on state indication information corresponding to the terminal.

Optionally, the apparatus further includes:
a second obtaining module, configured to obtain the state indication information corresponding to the terminal from the terminal or a third network side device in advance.

Optionally, the third network side device is a unified data management (UDM) device.

Optionally, the third determining submodule includes at least one of:
a third determining unit, configured to determine that the paging cause needs not to be carried in the paging message, in response to determining that the state indication information includes first state information, in which the first state information is configured to indicate that a number of USIM cards in a registration state on the terminal is zero or one; or
a forth determining unit, configured to determine that the paging cause needs not to be carried in the target notification message, in response to determining that the state indication information includes second state information and the terminal being in a connected state, in which the second state information is configured to indicate that a number of USIM cards in a registration state on the terminal is greater than or equal to two; or
a fifth determining unit, configured to determine that the paging cause needs to be carried in the paging message, in response to determining that the state indication information includes the second state information and the terminal being in an idle state; or
a sixth determining unit, configured to determine that the paging cause needs to be carried in the paging message, in response to determining that the state indication information includes the second state information, and a 3GPP connection corresponding to the terminal being in a connected state, a non-3GPP connection being in an idle state, and existence of downlink data corresponding to the non-3GPP connection business that needs to be sent to the terminal.

Optionally, the target notification message carries the paging cause or does not carry the paging cause.

According to a seventh aspect of the embodiments of the present disclosure, a computer-readable storage medium having stored therein a computer program is provided, the computer program is configured to perform the paging method according to any one of the first aspect.

According to an eighth aspect of the embodiments of the present disclosure, a computer-readable storage medium having stored therein a computer program is provided, the computer program is configured to perform the paging method according to any one of the second aspect or the third aspect.

According to a ninth aspect of the embodiments of the present disclosure, a paging apparatus is provided. The apparatus includes:
a processor;
a memory configured to store instructions executable by the processor;
in which, the processor is configured to perform the paging method in any one of the first aspect.

According to a tenth aspect of the embodiments of the present disclosure, an apparatus for controlling a device is provided. The apparatus includes:
a processor;
a memory configured to store instructions executable by the processor;
in which, the processor is configured to perform the paging method in any one of the second aspect or the third aspect.

The technical solution according to embodiments of the present disclosure may include the following beneficial effect.

In the embodiments of the present disclosure, the first network side device may determine whether the paging cause needs to be carried in the target notification message, in the case of determining that the terminal has downlink data arrived. Therefore, the target notification message carrying the paging cause is sent to the second network side device in the case that the paging cause needs to be carried. Whether to inform the terminal of the paging cause can be dynamically determined in the present disclosure, which avoids waste of air interface paging resources, and has high availability.

In the embodiments of the present disclosure, the first network side device may determine whether the paging cause needs to be carried in the target notification message at least based on the state indication information corresponding to the terminal. The state indication information is configured to indicate the number of USIM cards in the registration state on the terminal. A purpose of dynamically determining whether to send the paging cause to the terminal based on the number of the USIM cards in the registration state on the terminal is achieved, and the availability is high.

In the embodiments of the present disclosure, in the case that the number of the USIM cards in the registration state on the multi-card terminal is zero or one, the first network side device may page the multi-card terminal based on a paging mode of a single-card terminal, without carrying the paging cause in the target notification message. In the case that there are two or more USIM cards in the registration state on the multi-card terminal, the paging cause may be carried in the target notification message by the first network side device. A purpose of dynamically determining whether to send the paging cause to the terminal based on the number of the USIM cards in the registration state on the terminal is achieved, and the availability is high.

In the embodiments of the present disclosure, the second network side device may directly send the paging message carrying the paging cause to the terminal, after receiving the target notification message carrying the paging cause sent by the first network side device. Therefore, a purpose of dynamically determining whether to send the paging cause to the terminal is achieved, thereby avoiding waste of air interface paging resources, and having high availability.

In the embodiments of the present disclosure, whether the paging cause needs to be carried in the paging message sent to the terminal may be determined by the second network side device. Waste of air interface paging resources is further avoided, and the availability is high.

In the embodiments of the present disclosure, the second network side device may determine whether the paging cause needs to be carried in the paging message at least based on the state indication information corresponding to the terminal. Therefore, a purpose of dynamically determining whether to send the paging cause to the terminal based on the number of the USIM cards in the registration state on the terminal is achieved, and the availability is high.

It is to be understood that the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of the specification, illustrate embodiments consistent with the disclosure and serve to explain the principles of the disclosure together with the description.
FIG. 1 is a flowchart illustrating a paging method according to an embodiment.
FIG. 2 is a flowchart illustrating a paging method according to another embodiment.
FIG. 3 is a flowchart illustrating a paging method according to another embodiment.
FIG. 4 is a flowchart illustrating a paging method according to another embodiment.
FIG. 5 is a flowchart illustrating a paging method according to another embodiment.
FIG. 6 is a flowchart illustrating a paging method according to another embodiment.
FIG. 7 is a flowchart illustrating a paging method according to another embodiment.
FIG. 8 is a flowchart illustrating a paging method according to another embodiment.
FIG. 9 is a flowchart illustrating a paging method according to another embodiment.
FIG. 10 is a flowchart illustrating a paging method according to another embodiment.
FIG. 11 is a block diagram illustrating a paging apparatus according to an embodiment.
FIG. 12 is a block diagram illustrating a paging apparatus according to another embodiment.
FIG. 13 is a block diagram illustrating a paging apparatus according to another embodiment.
FIG. 14 is a structure diagram illustrating a paging apparatus according to an embodiment.
FIG. 15 is a structure diagram illustrating a paging apparatus according to another embodiment.

### DETAILED DESCRIPTION

Reference will now be made in detail to exemplary embodiments, examples of which are illustrated in the accompanying drawings. The following description refers to the accompanying drawings in which the same or similar numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the embodiments of the disclosure are only for the purpose of describing particular embodiments, but should not be construed to limit the embodiments of the disclosure. As used in the description of the present disclosure and the appended claims, "a" and "the" in singular forms mean including plural forms, unless clearly indicated in the context otherwise. It should also be understood that, as used herein, the term "and/or" represents and contains any one and all possible combinations of one or more associated listed items.

It should be further understood that, although terms such as "first", "second" and "third" are used herein for describing various information, these information should not be limited by these terms. These terms are only used for distinguishing the same type information from each other. For example, first information may also be called second information, and similarly, the second information may also be called the first information, without departing from the scope of the present disclosure. As used herein, the term "if' may be construed to mean "when" or "upon" or "in response to determining" or "in accordance with a determination" or "in response to detecting," that a stated condition precedent is true, depending on the context.

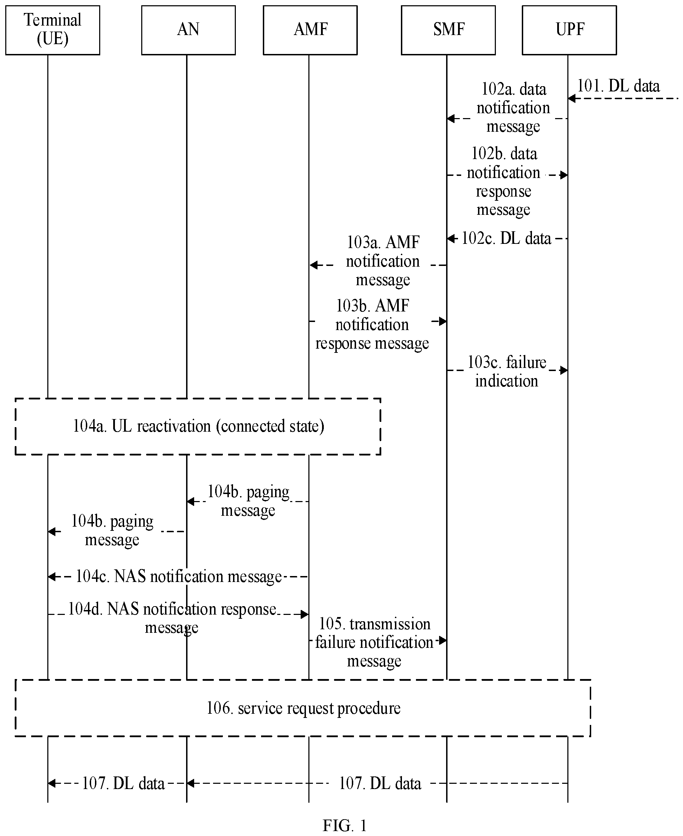

multiBefore introducing the paging solution provided by the embodiments of the present disclosure, a process of paging a single-card terminal in the related art is introduced firstly. Referring to FIG. 1, FIG. 1 is a flowchart illustrating a paging method according to an embodiment. The method includes following steps.

At step 101, a UPF (user plane function) determines that a terminal has downlink data arrived.

At step 102a, the UPF sends a data notification message to an SMF (session management function).

At step 102b, the SMF sends a data notification response message to the UPF.

At step 102c, the UPF sends the downlink data to the SMF.

At step 103a, the SMF sends an AMF (access and mobility management function) notification message to an AMF.

The SMF may send the AMF notification message to the AMF through an N1N2 interface between the SMF and the AMF.

At step 103b, the AMF sends an AMF notification response message to the SMF.

Similarly, the AMF may send the AMF notification response message to the SMF through the N1N2 interface between the AMF and the SMF.

At step 103c, the SMF sends a failure indication to the UPF.

Step 103c is optional, and if the SMF does not receive the response message sent by the AMF within a preset time period after sending the AMF notification message, the SMF may send the failure indication to the UPF.

If the UE is in a connected state, step 104a is executed. If the UE is in an idle state, step 104b is executed. If the LTE is connected through a 3GPP connection, a non-3GPP connection is in an idle state and there is downlink data corresponding to a non-3GPP access business that needs to be sent to the terminal, steps 104c to 104d are executed.

At step 104a, uplink reactivation is performed among the AMF, an AN (access network) and the UE.

At step 104b, the AMF sends a paging message to the AN. The AN sends the paging message to the UE.

At step 104c, the AMF sends a NAS (non-access stratum) notification message to the UE.

At step 104d, the UE sends a NAS notification response message to the AMF.

At step 105, the AMF sends a transmission failure notification message to the SMF.

Step 105 is optional. Step 105 is executed if any one of 104a, 104b, 104c, or 104d fails.

At step 106, a service request procedure is established among the UE, the AN, the AMF, the SMF, and the UPF.

At step 107, the UPF sends the downlink data to the UE.

The above embodiment describes the process of paging a single-card terminal and sending the downlink data in related art.

For a multi-card terminal, in the case that the multi-card terminal performs business through one USIM card and receives a paging message through another USIM card, in order to enable the multi-card terminal to determine whether to make a paging response based on a paging cause, the paging cause may be carried in above steps 102c, 103a, 104b, 104c, so that the multi-card terminal determines whether to make the paging response based on the paging cause.

Correspondingly, at step 104d, if the UE determines not to make the paging response based on the paging cause, indication information indicating that no paging response is made may be carried in the NAS response message, so that the network side device knows that the SIM (subscriber identity module) card receives the paging message but determines not to make the paging response.

At step 106, the UE may establish the service request procedure after determining to make the paging response based on the paging cause carried in the paging message or the NAS notification message.

It can be seen from the above process that if paging is performed for the multi-card terminal according to the above paging solution, the paging cause needs to be added in a plurality of signalings. In the case that only one USIM card in the multi-card terminal is working (in this case, the multi-card terminal is actually equivalent to a single-card terminal), additional signaling processing and communication delay can be added, and precious air interface paging resources can be wasted due to carrying the paging cause.

In order to solve the above problem, the following paging solution is provided in the present disclosure.

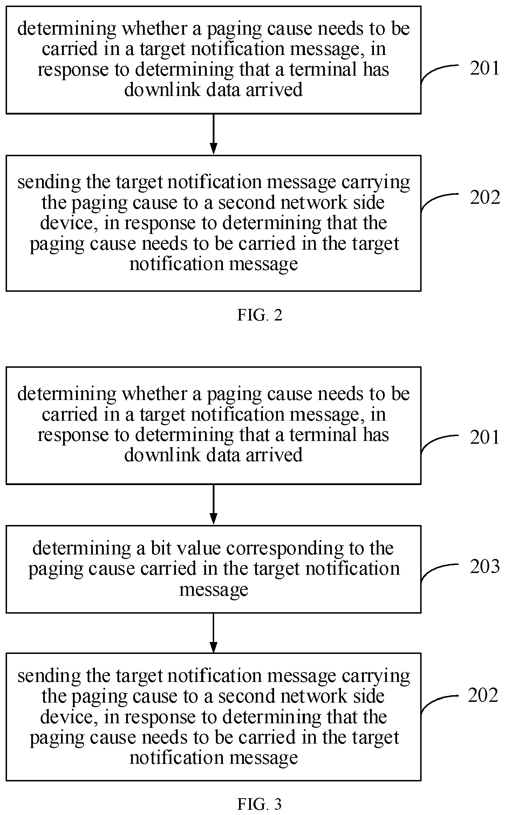

The paging solution provided in the present disclosure is described below from the perspective of a first network side device. The embodiments of the present disclosure provide a paging method referring to FIG. 2. FIG. 2 is a flowchart of a paging method according to an embodiment, the method is applied to the first network side device. The first network side device is an SMF or other network side devices, and the method may include the following steps.

At step 201, it is determined whether a paging cause needs to be carried in a target notification message, in response to determining that a terminal has downlink data arrived.

In the embodiment of the present disclosure, in the case that the first network side device receives a data notification message sent by a UPF, it is determined that the terminal has downlink data arrived. The first network side device may determine whether the paging cause needs to be carried in the target notification message at least based on state indication information of the terminal. The state indication information is configured to indicate a number of USIM cards in a registration state on the terminal. The target notification message includes, but is not limited to, a notification message sent to a second network side device.

At step 202, the target notification message carrying the paging cause is sent to the second network side device, in response to determining that the paging cause needs to be carried in the target notification message.

In the embodiment of the present disclosure, the first network side device may send the target notification message carrying the paging cause to the second network side device, in response to determining that the paging cause needs to be carried. The second network side device may be an AMF or other network side devices.

If the paging cause needs not to be carried, the first network side device directly sends the target notification message that does not carry the paging cause to the second network side device according to the related art.

In the above embodiment, the first network side device may determine whether the paging cause needs to be carried in the target notification message, in response to determining that the terminal has downlink data arrived. Therefore, the target notification message carrying the paging cause is sent to the second network side device in the case that the paging cause needs to be carried. Whether to inform the terminal of the paging cause can be dynamically determined in the present disclosure, which avoids waste of air interface paging resources, and has high availability.

In some alternative embodiments, referring to FIG. 3, FIG. 3 is a flowchart of another paging method based on the embodiment shown in FIG. 2. Before step 202 is executed, the method may further include the following steps.

At step 203, a bit value corresponding to the paging cause carried in the target notification message is determined.

In the embodiment of the present disclosure, before the first network side device sends the target notification message carrying the paging cause to the second network side device, the first network side device may determine the bit value corresponding to the paging cause carried in the target notification message, and notify the terminal of the paging cause through the bit value.

In an example, the first network side device may determine the paging cause based on the DSCP (differentiated services code point) information of a downlink data packet. Further, the bit value corresponding to the paging cause in the target notification message may be determined based on a correspondence between different paging causes and different bit values.

In the above embodiment, the first network side device may determine the bit value corresponding to the paging cause carried in the target notification message based on the DSCP information of the downlink data packet, so as to send the paging cause to the second network side device, and the second network side device notifies the terminal of the paging cause, which has high availability.

In some alternative embodiments, whether the paging cause needs to be carried in the target notification message may be dynamically determined by the first network side device. The first network side device may determine whether the paging cause needs to be carried at least based on the state indication information corresponding to the terminal. The state indication information is configured to indicate the number of USIM cards in the registration state on the terminal.

In an example, the first network side device may determine whether the paging cause needs to be carried in the target notification message based on the state indication information corresponding to the terminal.

In another example, the first network side device may determine whether the paging cause needs to be carried in the target notification message jointly based on a local policy and the state indication information corresponding to the terminal.

In the above embodiment, whether to send the paging cause to the second network side device may be dynamically determined by the first network side device, therefore avoiding waste of air interface resources and having high availability.

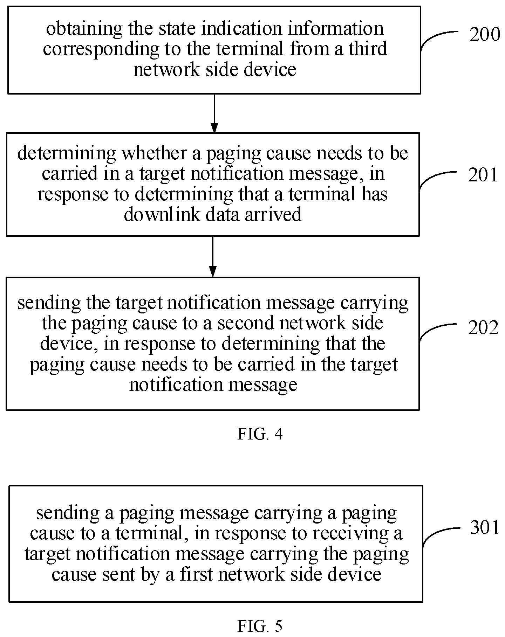

In some optional embodiments, referring to FIG. 4, FIG. 4 is a flowchart of another paging method based on an embodiment shown in FIG. 2. Before step 201 is executed, the method may further include the following steps.

At step 200, the state indication information corresponding to the terminal is obtained from a third network side device.

In the embodiment of the present disclosure, the third network side device may be a UDM (unified data management) device. The third network side device may also be another network side device, which is not limited in the present disclosure. In one example, the third network side device may also be an AMF.

The first network side device may download the state indication information corresponding to the terminal from the third network side device at the stage of establishing a business connection, so that the first network side device may determine whether the paging cause needs to be carried in the target notification message at least based on the state indication information corresponding to the terminal, in response to determining that the terminal has downlink data arrived.

The state indication information corresponding to the terminal obtained by the SMF from the UDM is shown in Table 1.

**Table 1**

| | | |
|---|---|---|
| UE context in SMF data | SUPI (UE ID) | Key |
| | PDU session ID(s) | List of PDU Session ID(s) for the UE. |
| | **state indication information of the terminal (MUSIM state)** | **whether the UE is working as MUSIM UE or not** |
| | For emergency PDU Session ID: | |
| | Emergency Information | The PGW-C+SMF FQDN for the emergency session, used for interworking with EPC |
| | For each non-emergency PDU session ID: | |
| | DNN | DNN for the PDU session |
| | SMF | Allocated SMF for the PDU session, including SMF IP Address and SMF NF ID |
| | PGW-C+SMF FQDN | The S5/S8 PGW-C+SMF FQDN used for interworking with EPS |

In the above embodiment, the first network side device may obtain the state indication information corresponding to the terminal from the third network side device in advance, so as to determine whether the paging cause needs to be carried in the target notification message at least based on the state indication corresponding to the terminal, therefore avoiding waste of air interface resources, reducing signaling processing and time delay, and having high availability.

In some alternative embodiments, if the state indication information corresponding to the terminal includes first state information, the first network side device may determine that the paging cause needs not to be carried in the target notification message. If the state indication information includes second state information, the first network side device determines that the paging cause needs to be carried in the target notification message.

In one example, a first state may be represented by, but not limited to, a "MUSIM_OFF" state, and the first state information is configured to indicate that the number of SIM cards in the registration state on the terminal may be zero or one. In other words, although the multi-card terminal supports multiple cards, in the "MUSIM _ OFF" state, the multi-card terminal actually serves as a single-card terminal. Correspondingly, the first network side device may send the target notification message that does not carry the paging cause to the second network side device in a manner of paging the single-card terminal in the related art.

A second state may be represented by, but not limited to, a "MUSIM _ ON" state, and the second state information is configured to indicate that the number of SIM cards in the registration state may be two or more. Accordingly, in the "MUSIM_ON" state, the multi-card terminal has a plurality of USIM cards being working. Correspondingly, the first network side device may send the target notification message carrying the paging cause to the second network side device.

The above is only exemplary explanations, those skilled in the art could conceive that the state indication information may also directly indicate the number of SIM cards in the registration state, and the other implementations of the state indication information configured to indicate the number of SIM cards in the registration state shall fall within the protection scope of the present disclosure.

In the above embodiment, whether to send the target notification message carrying the paging cause to the second network side device may be dynamically determined by the first network side device, so that whether to inform the terminal of the paging cause can be dynamically determined, thereby avoiding waste of air interface paging resources, and having high availability.

In some alternative embodiments, referring to FIG. 5, FIG. 5 is a flowchart of a paging method according to an embodiment, which may be applied to a second network side device. The second network side device may be an AMF or other network side devices, and the method may include the following steps.

At step 301, a paging message carrying a paging cause is sent to a terminal, in response to receiving a target notification message carrying the paging cause sent by a first network side device.

In the embodiment of the present disclosure, after receiving the target notification message carrying the paging cause sent by the first network side device, the second network side device may directly send the paging message carrying the paging cause to the terminal. A bit value of the paging cause in the paging message may be consistent with a bit value of the paging cause carried in the target notification message.

In the embodiment of the present disclosure, after receiving the target notification message carrying the paging cause sent by the first network side device, the second network side device may send the paging message carrying the paging cause to the terminal, so as to inform the terminal of the paging cause, therefore achieving a purpose that the first network side device dynamically determines whether to inform the terminal of the paging cause, avoiding waste of air interface resources, and having high availability.

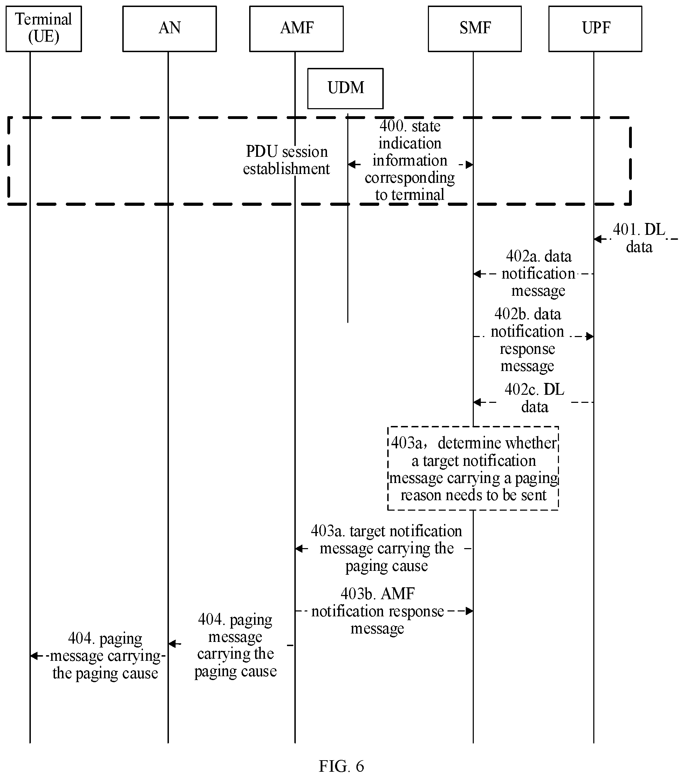

In some alternative embodiments, referring to FIG. 6, FIG. 6 is a flowchart of a paging method according to an embodiment. In FIG. 6, for example, the first network side device is an SMF, the second network side device is an AMF, the third network side device is a UDM, and the method may include the following steps.

At step 400, the SMF obtains state indication information corresponding to a terminal from the UDM.

In the embodiment of the present disclosure, the SMF may download the state indication information corresponding to the terminal from the UDM, when a PDU session establishment request is initiated on the terminal side. Optionally, the SMF may further obtain terminal capability information indicating whether the terminal supports multiple cards from the UDM. Subsequently, the SMF may determine whether to send the paging cause to the AMF jointly based on the terminal capability information in combination with the state indication information.

At step 401, the UPF determines that the terminal has downlink data arrived.

At step 402a, the UPF sends a data notification message to the SMF.

At step 402b, the SMF sends a data notification response message to the UPF.

At step 402c, the UPF sends the downlink data to the SMF.

At step 403a, after determining the paging cause needs to be carried in the target notification message at least based on the state indication information corresponding to the terminal, the SMF sends the target notification message carrying the paging cause to the AMF.

In the embodiment of the present disclosure, if the paging cause needs not to be carried in the target notification message, paging and downlink data transmission may be performed according to the manner shown in FIG. 1, and details are not described herein again. The target notification message is an AMF notification message.

At step 403b, the AMF sends an AMF notification response message to the SMF.

At step 404, the AMF sends a paging message carrying the paging cause to the terminal.

In the above embodiment, after the first network side device determines that the paging cause needs to be sent to the second network side device, the second network side may directly send the paging message carrying the paging cause to the terminal. A purpose of dynamically determining whether to inform the terminal of the paging cause is achieved. For all the terminals or the multi-card terminal using any USIM card, additional signaling processing and time delay caused by notifying the terminal of the paging cause are reduced, so that waste of air interface resources is avoided, and the availability is high.

In the above embodiment, whether to notify the terminal of the paging cause may be dynamically determined by the first network side device at least based on the state indication information corresponding to the terminal. In the embodiment of the present disclosure, whether to notify the terminal of the paging cause may also be directly determined by the second network side device.

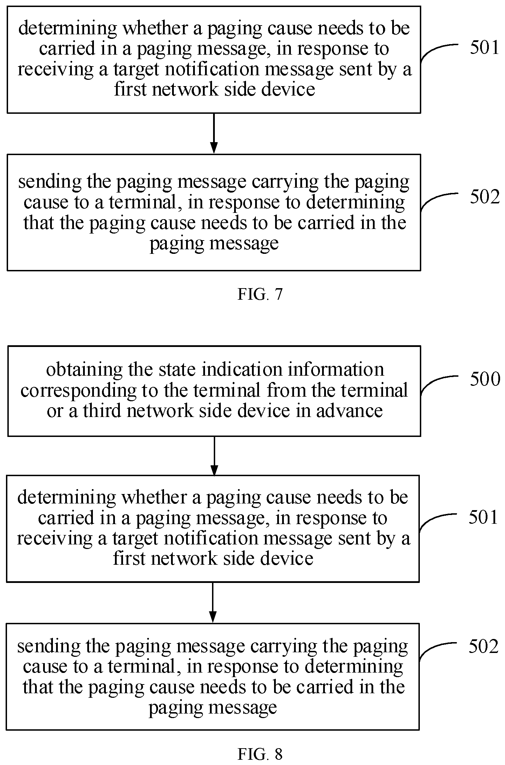

Referring to FIG. 7, FIG. 7 is a flowchart of a paging method according to an embodiment, which may be applied to a second network side device. The second network side device may be an AMF or other network side devices, and the method may include the following steps.

At step 501, it is determined whether a paging cause needs to be carried in a paging message, in response to receiving a target notification message sent by a first network side device.

In the embodiment of the present disclosure, the target notification message may carry the paging cause or may not carry the paging cause. In the case that the target notification message does not carry the paging cause, the second network side device may determine whether the paging cause needs to be carried in the paging message. In the case that the target notification message carries the paging cause, the second network side device may directly send the paging message carrying the paging cause to the terminal, or may further determine whether the paging cause needs to be carried in the paging message.

At step 502, the paging message carrying the paging cause is sent to the terminal, in response to determining that the paging cause needs to be carried in the paging message.

In the above embodiment, whether the paging cause needs to be carried in the paging message sent to the terminal may be determined by the second network side device. Waste of air interface paging resources is further avoided, and the availability is high.

In some alternative embodiments, the second network side device may determine whether the paging cause needs to be carried in the paging message at least based on state indication information corresponding to the terminal.

In an example, the second network side device may determine whether the paging cause needs to be carried in the paging message based on the state indication information corresponding to the terminal. In another example, the second network side device also may determine whether the paging cause needs to be carried in the paging message jointly based on the state indication information corresponding to the terminal and a local policy.

In the above embodiment, the second network side device may dynamically determine whether the paging cause needs to be carried in the paging message at least based on the state indication information corresponding to the terminal, so as to achieve a purpose of dynamically determining whether to inform the terminal of the paging cause, thereby avoiding waste of air interface resources, and having high availability.

In alternative optional embodiments, referring to FIG. 8, FIG. 8 illustrating a flowchart of paging method according to an embodiment. The method may further include the following steps.

At step 500, the state indication information corresponding to the terminal is obtained from the terminal or a third network side device in advance.

In the embodiment of the present disclosure, the third network side device may be a UDM device, or the third network side device may also be another network side device, which is not limited in the present disclosure. The AMF may directly obtain the state indication information corresponding to the terminal from the terminal in advance, or the terminal sends the state indication information to the UDM, the UDM stores the state indication information in a standardized information element table maintained by the UDM. The AMF obtains the state indication information corresponding to the terminal from the UDM. After the AMF obtains the state indication information corresponding to the terminal, the state indication information may be stored in a standardized information element table maintained by the AMF, as shown in Table 2.

**Table 2**

| | | |
|---|---|---|
| UE context in AMF data | AMF | Allocated AMF for the registered UE, including AMF address and AMF NF ID |
| | Access Type | 3GPP or non-3GPP access through this AMF |
| | Homogenous Support of IMS Voice over PS Sessions for AMF | Indicating if "IMS Voice over PS Sessions" is homogeneously supported in all TAs in the serving AMF or homogeneously not supported, or, the support is non-homogeneous/unknown, see clause 5.16.3.3 of TS 23.501 [2]. |
| | URRP-AMF information | UE Reachability Request Parameter indicating that a UE reachability notification from the AMF has been subscribed by the UDM. The information is per UE and should be kept even when the contexts related to a specific AMF is removed. |
| | **state indication information of the terminal (MUSIM state)** | **MUSIM_ON/OFF indicates whether the UE is working as MUSIM UE or not** |

In some alternative embodiments, the second network side device determining whether the paging cause needs to be carried in the paging message at least based on the state indication information corresponding to the terminal may include any one of the following.
1. It is determined that the paging cause needs not to be carried in the paging message, in response to determining that the state indication information includes first state information.
   In the embodiment of the present disclosure, if a number of USIM cards in a registration state on the terminal is 0 or 1, paging may be performed according to a manner of a single-card terminal, and there is no need to carry the paging cause in the paging message.
2. It is determined that the paging cause needs not to be carried in the paging message, in response to determining that the state indication information includes second state information, and the terminal being in a connected state.
   In the embodiment of the present disclosure, although the number of the USIM cards in the registration state on the terminal is 2 or more, the terminal is in the connected state, so that processing may be performed according to a manner used for a single-card terminal in the connected state in the related art (according to step 104 mentioned above).
3. It is determined that the paging cause needs to be carried in the paging message, in response to determining that the state indication information includes the second state information, and the terminal being in an idle state.
   In the embodiment of the present disclosure, in order to avoid a situation where another USIM card is performing business, and the business of another USIM card is directly interrupted, the paging cause may be carried in the paging message, so that the terminal determines whether to make a paging response based on the paging cause.
4. It is determined that the paging cause needs to be carried in the paging message, in response to determining that the state indication information includes the second state information, and a 3GPP connection corresponding to the terminal being in a connected state, a non-3GPP connection being in an idle state, and existence of downlink data corresponding to a non-3GPP connection business that needs to be sent to the terminal.

In the embodiment of the present disclosure, the second network side device may send a NAS paging message carrying the paging cause to the terminal.

In the above embodiment, the second network side device may dynamically determine whether the paging cause needs to be carried in the paging message at least based on the state indication information corresponding to the terminal, therefore avoiding waste of air interface resources and having high availability.

In some alternative embodiments, a first USIM card of the terminal initiates a registration request. The terminal determines that the state indication information includes the first state indication information (i.e., MUSIM_OFF). The first USIM card may not carry the state indication information in a registration request message. When a second USIM card initiates a registration request, the second USIM card determines that the state indication information includes the first state information, and that one USIM card is in a registration successful state. The second UMSIM card may send the registration request message carrying updated state indication information to the network side. The UDM and/or the AMF may update the state indication information corresponding to the terminal saved by the UDM and/or the AMF to the second state information (i.e., MUSIM_ON). After the second UMSI card is successfully registered, the terminal updates its own state indication information, and the updated state indication information is the second state information. The first UMSIM card initiates a state update, and updates the updated state indication information to the network side, including but not limited to updating to the UDM and/or the AMF.

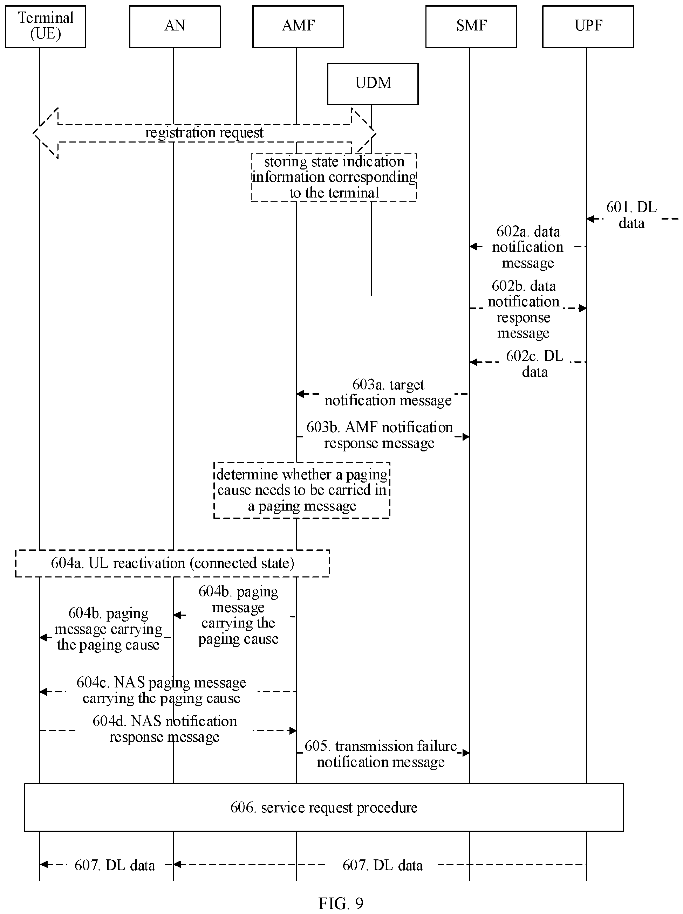

Referring to FIG. 9, FIG. 9 is a flowchart of a paging method according to an embodiment. In FIG. 9, for example, the first network side device is an SMF, the second network side device is an AMF, the third network side device is a UDM, and the method may include the following steps.

At step 601, the UPF determines that a terminal has downlink data arrived.

At step 602a, the UPF sends a data notification message to the SMF.

At step 602b, the SMF sends a data notification response message to the UPF.

At step 602c, the UPF sends the downlink data to the SMF.

At step 603a, the SMF sends a target notification message to the AMF.

The target notification message is an AMF notification message.

At step 603b, the AMF sends an AMF notification response message to the SMF.

The above steps may be consistent with steps 101 to 103b in FIG. 1.

In the embodiment of the present disclosure, the AMF determines whether the paging cause needs to be carried in the paging message. If the UE is in a connected state, the paging cause needs not to be carried in the paging message, step 604a is executed directly. If the UE is in an idle state, the paging cause needs to be carried in the paging message, step 604b is executed. If the LTE is connected through a 3GPP connection, a non-3GPP connection is in an idle state, and there is downlink data corresponding to a non-3GPP access business that needs to be sent to the UE, the paging cause needs to be carried in the paging message, and steps 604c to 604d are executed.

At step 604a, uplink reactivation is performed among the AMF, an AN and the UE.

At step 604b, the AMF sends the paging message carrying the paging cause to the AN, and the AN sends the paging message carrying the paging cause to the UE.

At step 604c, the AMF sends a NAS paging message carrying the paging cause to the UE.

At step 604d, the AMF sends a NAS notification response message to the AMF.

At step 605, the AMF sends a transmission failure notification message to the SMF.

Step 605 may be optional. Step 605 is executed if any one of 604a, 604b, 604c, or 604d fails.

At step 606, a service request procedure is established among the UE, the AN, the AMF, the SMF, and the UPF.

At step 607, the UPF sends the downlink data to the UE.

In the above embodiment, the second network side device may determine whether the paging cause needs to be carried in the paging message at least based on state indication information corresponding to the terminal. Therefore, a purpose of dynamically determining whether to send the paging cause to the terminal based on the number of the USIM cards in the registration state on the terminal is achieved, and the availability is high.

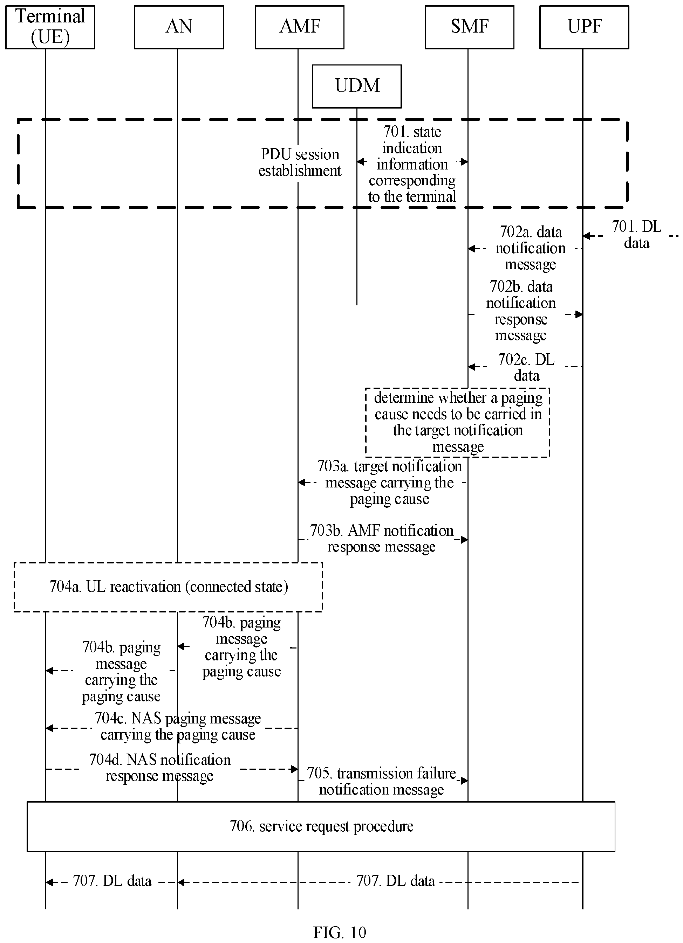

In some alternative embodiments, referring to FIG. 10, FIG. 10 is a flowchart of a paging method according to an embodiment. In FIG. 10, for example, the first network side device is an SMF, the second network side device is an AMF, the third network side device is a UDM, and the method may include the following steps.

At step 700, the SMF obtains state indication information corresponding to a terminal from the UDM.

In the embodiment of the present disclosure, when a PDU session establishment request is initiated on the terminal side, the SMF may download the state indication information corresponding to the terminal from the UDM. Optionally, the SMF may further obtain terminal capability information indicating that whether the terminal supports multiple cards from the UDM. Subsequently, the SMF may determine whether to send a paging cause to the AMF jointly based on the terminal capability information in combination with the state indication information.

At step 701, the UPF determines that the terminal has downlink data arrived.

At step 702a, the UPF sends a data notification message to the SMF.

At step 702b, the SMF sends a data notification response message to the UPF.

At step 702c, the UPF sends the downlink data to the SMF.

At step 703a, after determining the paging cause needs to be carried in the target notification message at least based on the state indication information corresponding to the terminal, the SMF sends the target notification message carrying the paging cause to the AMF.

In the embodiment of the present disclosure, if the paging cause needs not to be carried in the target notification message, paging and downlink data transmission may be performed according to the manner shown in FIG. 1, and details are not described herein again. The target notification message is an AMF notification message.

At step 703b, the AMF sends an AMF notification response message to the SMF.

If the UE is in a connected state, step 704a is executed. If the UE is in an idle state, step 704b is executed. If the LTE is connected through a 3GPP connection, a non-3GPP connection is in an idle state and there is downlink data corresponding to the non-3GPP access business that needs to be sent to the terminal, steps 704c to 704d are executed.

At step 704a, uplink reactivation is performed among the AMF, an AN and the UE.

At step 704b, the AMF sends a paging message carrying the paging cause to the AN, and the AN sends the paging message carrying the paging cause to the UE.

At step 704c, the AMF sends a NAS paging message carrying the paging cause to the UE.

At step 704d, the AMF sends a NAS notification response message to the AMF.

At step 705, the AMF sends a transmission failure notification message to the SMF.

Step 705 may be optional. Step 705 is executed if any one of 704a, 704b, 704c, or 704d fails.

At step 706, a service request procedure is established among the UE, the AN, the AMF, the SMF, and the UPF.

At step 707, the UPF sends the downlink data to the UE.

In the above embodiment, the first network side device may dynamically determine whether the paging cause needs to be sent to the second network side device. Further, the second network side device may determine whether to send the paging cause to the terminal, which achieves a purpose of dynamically determining whether to send the paging cause to the terminal, thereby avoiding additional signaling processing and time delay, avoiding waste of air interface resources, and having high availability.

Corresponding to the above application function implementation method embodiment, an embodiment of the present disclosure further provides an application function implementation apparatus.

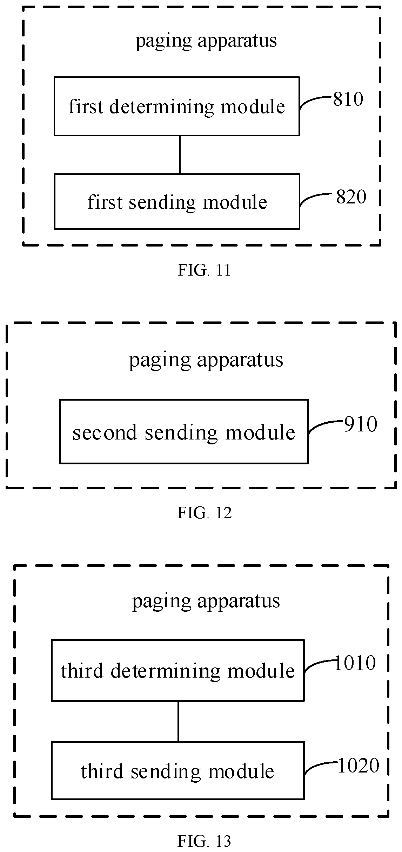

Referring to FIG. 11, FIG. 11 is a block diagram illustrating a paging apparatus according to an embodiment. The apparatus is applied to a first network side device, and includes a first determining module 810 and a first sending module 802.

The first determining module 810 is configured to determine whether a paging cause needs to be carried in a target notification message, in response to determining that a terminal has downlink data arrived.

The first sending module 820 is configured to send the target notification message carrying the paging cause to a second network side device, in response to determining that the paging cause needs to be carried in the target notification message.

Optionally, the apparatus further includes a second determining module.

The second determining module is configured to determine a bit value corresponding to the paging cause carried in the target notification message.

Optionally, the second determining module includes a first determining submodule.

The first determining submodule is configured to determine the bit value corresponding to the paging cause carried in the target notification message based on DSCP information of a downlink data packet.

Optionally, the first determining module includes a second determining submodule.

The second determining submodule is configured to determine whether the paging cause needs to be carried in the target notification message at least based on state indication information corresponding to the terminal. The state indication information is configured to indicate a number of USIM cards in a registration state on the terminal.

Optionally, the apparatus further includes a first obtaining module.

The first obtaining module is configured to obtain the state indication information corresponding to the terminal from a third network side device.

Optionally, the third network side device is a unified data management (UDM) device.

Optionally, the second determining submodule includes any one of a first determining unit or a second determining unit.

The first determining unit is configured to determine that the paging cause needs not to be carried in the target notification message, in response to determining that the state indication information includes first state information. The first state information is configured to indicate that the number of USIM cards in the registration state on the terminal is zero or one.

The second determining submodule is configured to determine that the paging cause needs to be carried in the target notification message, in response to determining that the state indication information includes second state information. The second state information is configured to indicate that the number of USIM cards in the registration state on the terminal is greater than or equal to two.

Referring to FIG. 12, FIG. 12 is a block diagram illustrating a paging apparatus according to an embodiment. The apparatus is applied to a second network side device. The apparatus includes a second sending module 910.

The second sending module is configured to send a paging message carrying a paging cause to a terminal, in response to receiving a target notification message carrying the paging cause sent by a first network side device.

Referring to FIG. 13, FIG. 13 is a block diagram illustrating a paging apparatus according to an embodiment. The apparatus is applied to a second network side device. The apparatus includes a third determining module 1010 and a third sending module 1020.

The third determining module 1010 is configured to determine whether a paging cause needs to be carried in a paging message, in response to receiving a target notification message sent by a first network side device.

The third sending module 1020 is configured to send the paging message carrying the paging cause to the terminal, in response to determining that the paging cause needs to be carried in the paging message.

Optionally, the third determining module includes a third determining submodule.

The third determining submodule is configured to determine whether the paging cause needs to be carried in the paging message at least based on state indication information corresponding to the terminal.

Optionally, the apparatus further includes a second obtaining module.

The second obtaining module is configured to obtain the state indication information corresponding to the terminal from the terminal or a third network side device in advance.

Optionally, the third network side device is a unified data management (UDM) device.

Optionally, the third determining submodule includes any one of a third determining unit, a forth determining unit, a fifth determining unit, or a sixth determining unit.

The third determining unit is configured to determine that the paging cause needs not to be carried in the paging message, in response to determining that the state indication information includes first state information. The first state information is configured to indicate that a number of USIM cards in a registration state on the terminal is zero or one.

The forth determining unit is configured to determine that the paging cause needs not to be carried in the target notification message, in response to determining that the state indication information includes second state information and the terminal being in a connected state. The second state information is configured to indicate that a number of USIM cards in a registration state on the terminal is greater than or equal to two.

The fifth determining unit is configured to determine that the paging cause needs to be carried in the paging message, in response to determining that the state indication information includes the second state information and the terminal being in an idle state.

The sixth determining unit is configured to determine that the paging cause needs to be carried in the paging message, in response to determining that the state indication information includes the second state information, and a 3GPP connection corresponding to the terminal being in a connected state, a non-3GPP connection being in an idle state, and existence of downlink data corresponding to the non-3GPP connection business that needs to be sent to the terminal.

Optionally, the target notification message carries a paging cause or does not carry a paging cause.

Regarding the embodiments of the apparatus, reference may be made to the descriptions of embodiments of the method since they corresponds to the embodiments of the method. The embodiments of the apparatus described above are only schematic. The units illustrated as separate components can be or not be separated physically, and components described as units can be or not be physical units, i.e., can be located at one place, or can be distributed onto multiple network units. It is possible to select some or all of the units according to actual needs, for realizing the objective of embodiments of the present disclosure. Those skilled in the art may understand and implement it without making creative effort.

Accordingly, a computer readable storage medium with a computer program stored thereon is provided in the present disclosure. The computer program is configured to implement any of the paging method on the side of the first network side device.

Accordingly, a computer readable storage medium with a computer program stored thereon is provided in the present disclosure. The computer program is configured to implement any one of the paging methods on the side of the second network side device.

Accordingly, a paging apparatus is provided in the present disclosure. The apparatus includes:
a processor;
a memory configured to store instructions executable by the processor;
in which the processor is configured to perform any one of the paging method on the side of the first network side device.

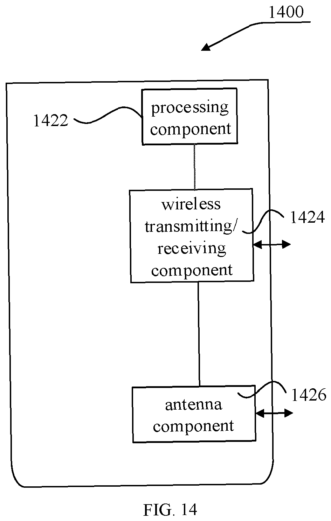

As shown in FIG. 14, FIG. 14 is a structural diagram of a paging apparatus 1400 according to an embodiment. Apparatus 1400 can be provided as the first network side device. Referring to Fig. 14, the apparatus 1400 includes a processing component 1422, a wireless transmitting/receiving component 1424, an antenna component 1426, and a signal processing unit peculiar to a wireless interface, and the processing component 1422 may further include one or more processors.

One processor of the processing component 1422 is configured to perform any one of the paging method on the side of the first network side device.

Accordingly, a paging apparatus is provided in the present disclosure. The apparatus includes:
a processor;
a memory configured to store instructions executable by the processor;
in which the processor is configured to perform any one of the paging method on the side of the second network side device.

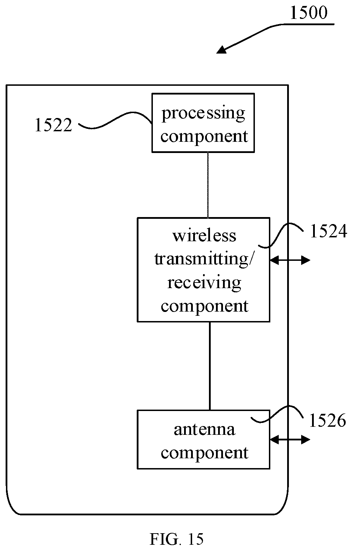

As shown in FIG. 15, FIG. 15 is a structural diagram of a paging apparatus 1500 according to an embodiment. Apparatus 1500 may be provided as the second network side device. Referring to Fig. 15, the apparatus 1500 includes a processing component 1522, a wireless transmitting/receiving component 1524, an antenna component 1526, and a signal processing unit peculiar to a wireless interface, and the processing component 1522 may further include one or more processors.

One processor of the processing component 1522 is configured to perform any one of the paging method on the side of the second network side device.

After considering the specification and practicing the disclosure herein, those skilled in the art will easily think of other implementations. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present disclosure is not limited to the precise structure described above and shown in the drawings, and various modifications and changes may be made without departing from its scope. The scope of the present application is only limited by the appended claims. The scope of the present application is only limited by the appended claims.

## Claims

1. A paging method, applied to a first network side device, comprising:
determining whether a paging cause needs to be carried in a target notification message, in response to determining that a terminal has downlink data arrived; and
sending the target notification message carrying the paging cause to a second network side device, in response to determining that the paging cause needs to be carried in the target notification message.

2. The method of claim 1, wherein before sending the target notification message carrying the paging cause to the second network side device, the method further comprises:
determining a bit value corresponding to the paging cause carried in the target notification message.

3. The method of claim 2, wherein determining the bit value corresponding to the paging cause carried in the target notification message comprises:
determining the bit value corresponding to the paging cause carried in the target notification message based on differentiated services code point (DSCP) information of a downlink data packet.

4. The method of claim 1, wherein determining whether the paging cause needs to be carried in the target notification message comprises:
determining whether the paging cause needs to be carried in the target notification message at least based on state indication information corresponding to the terminal, wherein the state indication information is configured to indicate a number of universal subscriber identity module (USIM) cards in a registration state on the terminal.

5. The method of claim 4, wherein before determining that the terminal has the downlink data arrived, the method further comprises:
obtaining the state indication information corresponding to the terminal from a third network side device.

6. The method of claim 5, wherein the third network side device is a unified data management (UDM) device.

7. The method of claim 4, wherein determining whether the paging cause needs to be carried in the target notification message at least based on the state indication information corresponding to the terminal comprises at least one of:
determining that the paging cause needs not to be carried in the target notification message, in response to determining that the state indication information comprises first state information, wherein the first state information is configured to indicate that the number of USIM cards in the registration state on the terminal is zero or one; or
determining that the paging cause needs to be carried in the target notification message, in response to determining that the state indication information comprises second state information, wherein the second state information is configured to indicate that the number of USIM cards in the registration state on the terminal is greater than or equal to two.

8. A paging method, applied to a second network side device, comprising:
sending a paging message carrying a paging cause to a terminal, in response to receiving a target notification message carrying the paging cause sent by a first network side device.

9. A paging method, applied to a second network side device, comprising:
determining whether a paging cause needs to be carried in a paging message, in response to receiving a target notification message sent by a first network side device; and
sending the paging message carrying the paging cause to a terminal, in response to determining that the paging cause needs to be carried in the paging message.

10. The method of claim 9, wherein determining whether the paging cause needs to be carried in the paging message comprises:
determining whether the paging cause needs to be carried in the paging message at least based on state indication information corresponding to the terminal.

11. The method of claim 10, further comprising:
obtaining the state indication information corresponding to the terminal from the terminal or a third network side device in advance.

12. The method of claim 11, wherein the third network side device is a unified data management (UDM) device.

13. The method of claim 10, wherein determining whether the paging cause needs to be carried in the paging message at least based on the state indication information corresponding to the terminal comprises at least one of:
determining that the paging cause needs not to be carried in the paging message, in response to determining that the state indication information comprises first state information, wherein the first state information is configured to indicate that a number of USIM cards in a registration state on the terminal is zero or one; or
determining that the paging cause needs not to be carried in the paging message, in response to determining that the state indication information comprises second state information and the terminal being in a connected state, wherein the second state information is configured to indicate that a number of USIM cards in a registration state on the terminal is greater than or equal to two; or
determining that the paging cause needs to be carried in the paging message, in response to determining that the state indication information comprises second state information and the terminal being in an idle state; or
determining that the paging cause needs to be carried in the paging message, in response to determining that the state indication information comprises second state information, a 3GPP connection corresponding to the terminal being in a connected state, a non-3GPP connection being in an idle state, and existence of downlink data corresponding to non-3GPP connection business that needs to be sent to the terminal.

14. The method of any of claims 9 to 13, wherein the target notification message carries the paging cause or does not carry the paging cause.

15. A paging apparatus, applied to a first network side device, comprising:
a first determining module, configured to determine whether a paging cause needs to be carried in a target notification message, in response to determining that a terminal has downlink data arrived;
a first sending module, configured to send the target notification message carrying the paging cause to a second network side device, in response to determining that the paging cause needs to be carried in the target notification message.

16. The apparatus of claim 15, further comprising:
a second determining module, configured to determine a bit value corresponding to the paging cause carried in the target notification message.

17. The apparatus of claim 16, wherein the second determining module comprises:
a first determining submodule, configured to determine the bit value corresponding to the paging cause carried in the target notification message based on differentiated services code point (DSCP) information of a downlink data packet.

18. The apparatus of claim 15, wherein the first determining module comprises:
a second determining submodule, configured to determine whether the paging cause needs to be carried in the target notification message at least based on state indication information corresponding to the terminal, wherein the state indication information is configured to indicate a number of universal subscriber identity module (USIM) cards in a registration state on the terminal.

19. The apparatus of claim 18, further comprising:
a first obtaining module, configured to obtain the state indication information corresponding to the terminal from a third network side device.

20. The apparatus of claim 19, wherein the third network side device is a unified data management (UDM) device.

21. The apparatus of claim 18, wherein the second determining submodule comprises at least one of:
a first determining unit, configured to determine that the paging cause needs not to be carried in the target notification message, in response to determining that the state indication information comprises first state information, wherein the first state information is configured to indicate that the number of USIM cards in the registration state on the terminal is zero or one; or
a second determining unit, configured to determine that the paging cause needs to be carried in the target notification message, in response to determining that the state indication information comprises second state information, wherein the second state information is configured to indicate that the number of USIM cards in the registration state on the terminal is greater than or equal to two.

22. A paging apparatus, applied to a second network side device, comprising:
a second sending module, configured to send a paging message carrying a paging cause to a terminal, in response to receiving a target notification message carrying the paging cause sent by a first network side device.

23. A paging apparatus, applied to a second network side device, comprising:
a third determining module, configured to determine whether a paging cause needs to be carried in a paging message, in response to receiving a target notification message sent by a first network side device;
a third sending module, configured to send the paging message carrying the paging cause to a terminal, in response to determining that the paging cause needs to be carried in the paging message.

24. The apparatus of claim 23, wherein the third determining module comprises:
a third determining submodule, configured to determine whether the paging cause needs to be carried in the paging message at least based on state indication information corresponding to the terminal.

25. The apparatus of claim 23, further comprising:
a second obtaining module, configured to obtain the state indication information corresponding to the terminal from the terminal or a third network side device in advance.

26. The apparatus of claim 25, wherein the third network side device is a unified data management (UDM) device.

27. The apparatus of claim 24, wherein the third determining submodule comprises at least one of:
a third determining unit, configured to determine that the paging cause needs not to be carried in the paging message, in response to determining that the state indication information comprises first state information, wherein the first state information is configured to indicate that a number of USIM cards in a registration state on the terminal is zero or one; or
a forth determining unit, configured to determine that the paging cause needs not to be carried in the target notification message, in response to determining that the state indication information comprises second state information and the terminal being in a connected state, wherein the second state information is configured to indicate that a number of USIM cards in a registration state on the terminal is greater than or equal to two; or
a fifth determining unit, configured to determine that the paging cause needs to be carried in the paging message, in response to determining that the state indication information comprises the second state information and the terminal being in an idle state; or
a sixth determining unit, configured to determine that the paging cause needs to be carried in the paging message, in response to determining that the state indication information comprises the second state information, and a 3GPP connection corresponding to the terminal being in a connected state, a non-3GPP connection being in an idle state, and existence of downlink data corresponding to the non-3GPP connection business that needs to be sent to the terminal.

28. The apparatus of any of claims 23 to 27, wherein the target notification message carries the paging cause or does not carry the paging cause.

29. A non-transitory computer-readable storage medium having stored therein a computer program, wherein the computer program is configured to perform the paging method according to any one of claims 1 to 7.

30. A non-transitory computer-readable storage medium having stored therein a computer program, wherein the computer program is configured to perform the paging method according to any one of claims 8 or 9 to 14.

31. A paging apparatus, comprising:
a processor;
a memory for storing instructions executable by the processor;
wherein the processor is configured to perform the paging method according to any one of claims 1 to 7.

32. A paging device, comprising:
a processor;
a memory for storing instructions executable by the processor;
wherein the processor is configured to perform the paging method according to any one of claims 8 or 9 to 14.
